Europäisches Patentamt

European Patent Office

Office européen des brevets

(19)

(11) Numéro de publication: **0 260 209 B1**

# FASCICULE DE BREVET EUROPEEN

(12)

(45) Date de publication de fascicule du brevet:
**02.10.91**

(51) Int. Cl.⁵: **F24J 2/46**, F24J 2/34,
F24J 2/14

(21) Numéro de dépôt: **87480005.5**

(22) Date de dépôt: **16.07.87**

(54) **Chauffe-eau solaire de stockeur comportant un écran isolant.**

(30) Priorité: **08.09.86 FR 8612636**

(43) Date de publication de la demande:
**16.03.88 Bulletin 88/11**

(45) Mention de la délivrance du brevet:
**02.10.91 Bulletin 91/40**

(84) Etats contractants désignés:
**DE ES GR IT**

(56) Documents cités:
| | |
|---|---|
| EP-A- 0 009 012 | DE-A- 2 558 767 |
| DE-A- 3 439 150 | FR-A- 2 269 038 |
| FR-A- 2 425 037 | US-A- 4 112 918 |
| US-A- 4 159 712 | US-A- 4 483 324 |

(73) Titulaire: **Giordano, Pascale**
**Chemin de St Bernard**
**F-06220 Vallauris(FR)**

(72) Inventeur: **Giordano, Pascale**
**Chemin de St Bernard**
**F-06220 Vallauris(FR)**

(74) Mandataire: **Hautier, Jean-Louis**
**Cabinet Hautier Office Méditerranéen de**
**Brevets d'Invention et de Marques 24 rue**
**Masséna**
**F-06000 Nice(FR)**

## Description

L'invention a pour objet un chauffe-eau solaire stockeur comportant un écran isolant dynamique.

Actuellement, il existe des portes isolantes qui, lorsqu'il n'y a pas de soleil, viennent se refermer sur l'écran transparent pour isoler la cuve et éviter au maximum les pertes thermiques.

L'état de la technique peut être défini par les brevets suivants :

FR-A-2 546 552 qui décrit une enveloppe à paroi multiple isolée thermiquement et munie de moyens de récupération d'énergie solaire pour délimiter, au moins en partie, un volume habitable.

FR-A-2 536 157, qui décrit un chauffe-eau solaire passif pourvu d'une porte pour éviter la nuit les pertes thermiques.

FR-A-2 524 619, qui décrit un dispositif mobile générateur d'eau chaude avec écran isolant intégré et escamotable. Ce dispositif utilise, en combinaison, une capacité métallique à parois recouvertes d'un enduit capteur et d'une enveloppe tourillonante substance transparente pourvue d'un collecteur contenant une substance isotherme divisée en parcelles préférentiellement sphériques. L'isolant est donc formé par des billes qui, selon la position de la cuve de stockage, se trouvent réparties autour de ladite cuve pour l'isoler ou, au contraire, rassemblées et stockées dans un collecteur longitudinal.

Cette enveloppe tourillonnante implique une importante mise en oeuvre pour uniquement le ballon de stockage, le coût du chauffe-eau solaire sera donc obligatoirement élevé ainsi que le coût sa maintenance.

L'invention tend à éviter tous ces inconvénients.

Elle concerne un dispositif améliorant le principe du chauffe-eau solaire stockeur. Les avantages de ce dispositif résident dans ces bonnes performances de captation et sa conception simple à partir de composants peu onéreux.

Le chauffe-eau solaire stockeur selon l'invention est du type composé d'un bac recouvert par un écran isolant. Ledit écran isolant présente une couche supérieure réfléchissante permettant de capter et de concentrer les rayons lumineux sur une cuve. Ladite cuve est disposée au centre dudit bac, en matériau absorbant, et contient de l'eau qui permet l'absorption et le stockage de la chaleur fournie par le rayonnement lumineux. Une couverture, ou écran transparent, posée sur le haut du bac, est exposée aux rayons lumineux.

Le chauffe-eau solaire stockeur selon l'invention est caractérisé par le fait que l'écran isolant est souple et asservi à un moyen de déplacement qui permet de modifier son déploiement. Ledit moyen de déplacement est conçu pour que ledit écran isolant puisse se trouver automatiquement ou manuellement, soit en position déployée pour capter et concentrer les rayons lumineux sur ladite cuve, soit en position repliée couvrant la cuve, pour réduire les pertes thermiques. En position de couverture, l'écran isolant a sa face réfléchissante orientée vers la cuve.

Le moyen de déplacement de l'écran isolant est composé par des tringles et des câbles qui agissent comme pour des rideaux.

Le moyen de commande du déplacement de l'écran isolant peut être assuré par un capteur de température et/ou de luminosité.

Le moyen de déplacement est composé d'au moins deux poulies, dont l'une est entraînée par un moteur, lesdites poulies sont liées par un câble qui supporte deux serre-câbles de fixation, fixés sur chacun de ses brins. Lorsque le moteur tourne dans un sens, les deux serre-câbles, qui sont liés à l'écran isolant, entraînent celui-ci vers une de ses deux positions d'utilisation possibles par une inversion du sens de rotation, ou passent d'une position à l'autre (déployée en écran ou repliée).

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue schématique du chauffe-eau solaire stockeur selon l'invention, vu en coupe avec son isolant qui capte et concentre les rayons sur la cuve.

La figure 2 est une vue schématique du chauffe-eau solaire stockeur selon l'invention, vu en coupe avec son isolant dynamique qui est venu recouvrir la cuve pour éviter les déperditions thermiques.

La figure 3 est une vue schématique du chauffe-eau solaire stockeur selon l'invention, vu en coupe avec son isolant dynamique qui est venu recouvrir la cuve pour éviter les déperditions thermiques ; avec représentés schématiquement, des moyens électriques de chauffage d'appoint.

La figure 4 est vue schématique du chauffe-eau solaire vu en coupe, mettant en évidence les moyens de déplacement de l'écran isolant dynamique, le chauffe-eau solaire est coupé en deux avec une représentation de la position absorption et une position de la fonction stockage.

Le chauffe-eau solaire stockeur est composé d'un bac 1 recouvert par un isolant 2 présentant une couche supérieure réfléchissante 3 permettant de capter et de concentrer les rayons lumineux sur une cuve 4 disposée an centre dudit bac 1.

Cette cuve 4 est formée en matériau absorbant contenant de l'eau qui permet l'absorption et le stockage de la chaleur fournie par le rayonnement lumineux, une couverture ou écran de protection 5 transparent posé sur le haut du bac 1 est exposé aux rayons lumineux.

De préférence, le bac 1 est de forme semi-cylindrique ou toute autre forme analogue. Il est formé par deux flasques, non représentés sur les dessins. Le fond du bac 1 est recouvert par un isolant 2 présentant une couche supérieure réfléchissante 3.

L'écran de protection 5 permet de réaliser un effet de serre dans le bac 1.

La forme du bac 1 et les propriétés de l'isolant 2 permettent la concentration des rayons lumineux sur la cuve 4.

L'écran de protection 5 même lorsqu'il est doublé (double vitrage par exemple) ne permet pas une isolation suffisante de la cuve 4 dans le cas où celle-ci est nécessaire (la nuit en particulier).

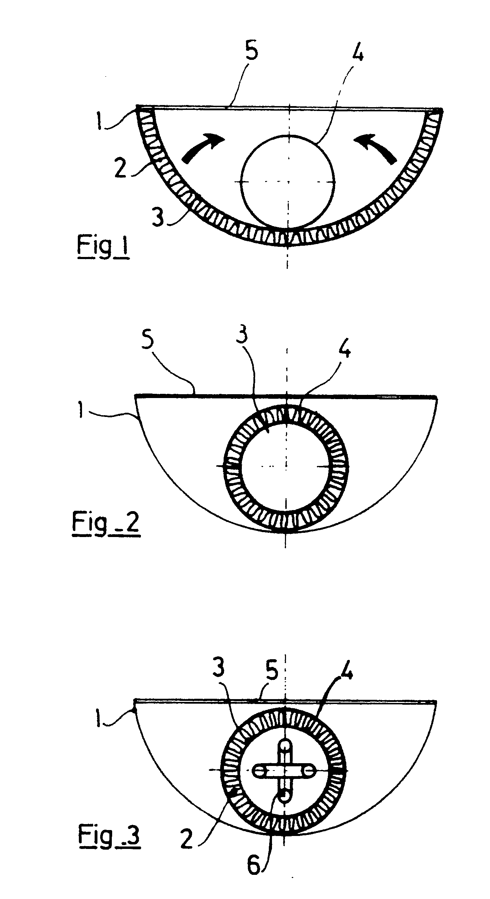

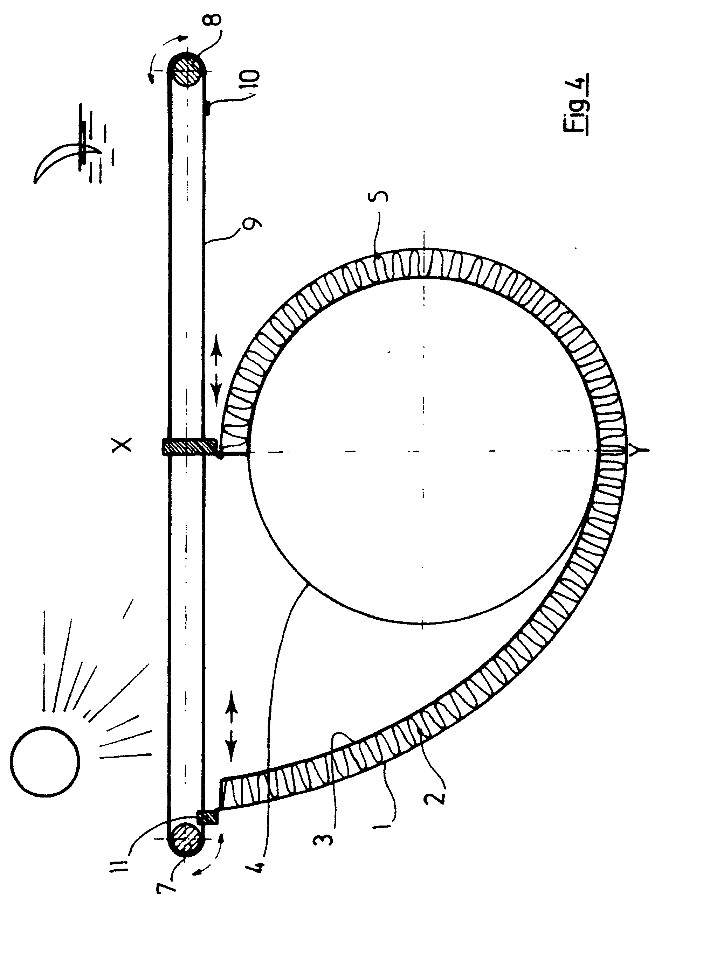

L'écran 2 selon l'invention est dynamique, il peut, en combinaison avec les fonctions de captation et de concentration des rayons lumineux sur la cuve et après déplacement, entourer la cuve 4 pour l' isoler et éviter les déperditions thermiques, voir les figures 2 et 3.

L'isolant 2 doit être souple (mousse de polyéthylène ou autre de mêmes caractéristiques), ayant au moins une face réfléchissante. Lorsque la cuve 4 est utilisée pour absorber la chaleur du rayonnement lumineux, le dispositif agit de la même manière qu'un chauffe-eau solaire stockeur classique, tel que représenté à la figure 1.

Par contre, lorsque la cuve 4 est utilisée pour stocker la chaleur, l'isolant 2 peut être replié sur la cuve 4 de manière à faire office de couverture isolante qui limite les déperditions thermiques, voir les figures 2 et 3. Le moyen de déplacement peut être manuel ou automatique grâce à une motorisation régulée. Le dispositif selon l'invention permet l'adaptation optionnelle à la cuve 4 d'un moyen électrique de chauffage 6 destiné à fournir un appoint énergétique lorsque celui-ci est nécessaire. On obtient, selon ce mode de réalisation, un chauffe-eau électro-solaire selon la figure 3.

Le moyen de déplacement de l'isolant dynamique 2 est représenté à la figure 4.

Deux poulies 7 et 8, dont l'une, la poulie 8, est entraînée par un moteur, sont liées par un câble 9 qui supporte deux serre-câbles de liaison 10 et 11 fixés sur chacun de ses brins.

Lorsque le moteur tourne dans un sens, les deux serre-câbles 10 et 11, qui sont liées à l'écran isolant 2, entrainent celui-ci vers une de ses deux positions d'utilisation possibles soit à gauche de l'axe XY : la position "absorption", soit à droite de l'axe XY : la position "stockage" (voir figure 4). Le changement de fonction de l'isolant dynamique 2 est effectué en inversant le sens. L'articulation de la liaison serre-câble/isolant 10, 11 et 2 est réalisée par un moyen faisant office de charnière 12, 13 ou tout autre moyen équivalent.

Le déclenchement du déplacement de l'écran isolant 2 peut être assuré par une sonde thermosensible, et son arrêt par des capteurs de fin de course, par exemple.

La face réfléchissante 3 de l'écran dynamique 2 est orientée vers la cuve 4.

Lorsque les dimensions l'exigent, il est possible de reproduire plusieurs fois le moyen de déplacement sur la longueur d'isolant, afin de répartir les efforts de tractions.

## Revendications

1. Chauffe-eau solaire stockeur, du type composé d'un bac (1) recouvert par un écran isolant (2), présentant une couche supérieure réfléchissante (3) permettant de capter et de concentrer les rayons lumineux sur une cuve (4) disposée au centre dudit bac (1), en matériau absorbant, contenant de l'eau qui permet l'absorption et le stockage de la chaleur fournie par le rayonnement lumineux, une couverture, ou écran transparent (5), posée sur le haut du bac (1) est exposée aux rayons lumineux, caractérisé par le fait

   que l'écran isolant (2) est souple et asservi à un moyen de déplacement qui permet de modifier son déploiement, ledit moyen de déplacement est conçu pour que ledit écran isolant (2) puisse se trouver automatiquement ou manuellement, soit en position déployée pour capter et concentrer les rayons lumineux sur ladite cuve (4), soit en position repliée couvrant la cuve (4), pour réduire les pertes thermiques ; en position de couverture, l'écran isolant a sa face réfléchissante orientée vers la cuve (4).

2. Dispositif selon la revendication 1, caractérisé par le fait

   que ledit moyen de déplacement de l'écran isolant (2) est composé par des tringles et des câbles qui agissent comme pour des rideaux.

3. Dispositif selon la revendication 2, caractérisé par le fait

   que ledit moyen de commande du déplacement de l'écran isolant (2) peut être assuré par un capteur de température et/ou de luminosité.

4. Dispositif selon la revendication 1, caractérisé par le fait

   que ledit moyen de déplacement est composé d'au moins deux poulies, dont l'une est entraînée par un moteur, lesdites poulies sont liées par un câble qui supporte deux serre-câbles de fixation, fixés sur chacun de ses brins ; lorsque le moteur tourne dans un sens, les deux serre-câbles, qui sont liés à l'écran isolant, entraînent celui-ci vers une de ses deux positions d'utilisation possibles par une inversion du sens de rotation, ou passent d'une position à l'autre (déployée en écran ou repliée).

## Claims

1. Solar storage water heater of a type composed of a container (1) covered with an insulating shield (2), said shield (2) comprising an upper reflecting layer (3) permitting to capture and to concentrate the light rays on a vessel (4) disposed in the center of said container (1), said vessel (4) consisting of an absorbing material and containing water permitting to absorb and store the heat delivered by the radiation of light; a cover or transparent shield (5) which is disposed on the upper side of said container (1) being exposed to the light rays, characterized in

    that the insulating shield (2) is resilient and controlled by a displacing means which allows the deployement thereof to be modified, said displacing means being provided such that the insulating shield (2) may attain automatically or manually either its deployed position to capture and to concentrate the light rays on said vessel (4) or its draw-in position covering the vessel (4) to reduce the thermal losses; in the covering position the insulating shield having its reflecting surface oriented towards the vessel.

2. Apparatus according to claim 1, characterized in

    that said displacing means for the insulating shield (2) is composed of rods and cables which act as for curtains.

3. Apparatus according to claim 2, characterized in

    that said means for controlling the displacement of the insulating shield (2) may be assured by a temperature detector and/or a luminosity detector.

4. Apparatus according to claim 1, characterized in

    that said displacing means is composed of at least two pulleys, one of which is driven by a motor, said pulleys are connected by a cable supporting two cable clamps for fixation which are fixed on each of its returning ends; that when the motor rotates in one sense, the two cable clamps connected to the insulating shield are driving the latter towards one of its two possible utilization positions by inverting the sense of rotation, or pass from one position to the other (of deployed or drawn-in shield).

## Patentansprüche

1. Solarspeicher-Warmwasserbereiter eines Typs, der aus einem Behälter (1) aufgebaut wird, der von einer isolierenden Abschirmung (2) abgedeckt wird, die eine obere reflektierende Schicht (3) aufweist, um die Lichtstrahlen einzufangen und auf ein in der Mitte des Behälters angeordnetes, aus absorbierendem Material gebildetes Gefäß (4), das Wasser enthält, das die Absorbtion und die Speicherung der von der Lichtstrahlung gelieferten Wärme erlaubt, zu konzentrieren, wobei eine Abdeckung oder eine lichtdurchlässige Abschirmung (5), die an der Oberseite des Behälters (1) angebracht ist, den Lichtstrahlen ausgesetzt ist, dadurch gekennzeichnet,

    daß die isolierende Abschirmung (2) elastisch ist und von einem Verschiebungsmittel gesteuert wird, das ihre Ausbreitung zu modifizieren erlaubt, wobei das Verschiebungsmittel so ausgebildet ist, daß sich die isolierende Abschirmung (2) automatisch oder manuell entweder in die ausgebreitete Position, um die Lichtstrahlen einzufangen und auf das Gefäß (4) zu konzentrieren, oder in die das Gefäß (4) abdeckende, eingezogene Position, um die Wärmeverluste zu verringern, begeben kann; daß die reflektierende Seite der isolierenden Abschirmung in der abdeckenden Position auf das Gefäß (4) gerichtet ist.

2. Vorichtung gemäß Anspruch 1, dadurch gekennzeichnet,

    daß das Verschiebungsmittel der isolierenden Abschirmung (2) aus einem Gestänge und Seilen, die wie bei Vorhängen wirken, aufgebaut ist.

3. Vorichtung gemäß Anspruch 2, dadurch gekennzeichnet,

    daß das Mittel zum Steuern der Verschiebung der isolierenden Abschirmung (2) durch einen Temperatur-und/oder Helligkeitsfühler gegeben sein kann.

4. Vorichtung gemäß Anspruch 1, dadurch gekennzeichnet,

    daß das Verschiebungsmittel aus wenigstens zwei Scheiben aufgebaut ist, von denen eine von einem Motor angetrieben wird, wobei die Scheiben mittels eines Seils verbunden sind, das zwei Befestigungs-Seilklemmen trägt, die an jedem seiner Umkehr-Enden befestigt sind; daß, wenn sich der Motor in einem Richtungssinn dreht, die zwei mit der isolierenden Abschirmung verbundenen Befestigungs-Seilklemmen jene durch eine Umkehrung des Drehsinnes in eine ihrer zwei möglichen Gebrauchspositionen bewegen, oder sich von einer Position in die andere (der ausgebreiteten oder eingezogenen Abschirmung) bewegen.

Fig 1

Fig 2

Fig 3

Fig 4